# EUROPEAN PATENT APPLICATION

(11) **EP 2 664 993 A1**
(43) Date of publication of application: **20.11.2013**
(21) Application number: 11855888.1
(22) Date of filing: 12.01.2011
(51) Int. Cl.: G06F 12/12, G06F 12/08

(54) **CACHE MEMORY DEVICE, CACHE MEMORY CONTROL DEVICE, INFORMATION PROCESSING DEVICE, CACHE MEMORY CONTROL METHOD, AND THRESHOLD VALUE DETERMINATION PROGRAM FOR CACHE MEMORY DEVICE**

(71) Applicant: Fujitsu Limited, Kawasaki-shi, Kanagawa 211-8588 (JP)
(72) Inventor: YAMAMOTO, Takashi, Kawasaki-shi Kanagawa 2118588 (JP); ISHIZUKA, Takaharu, Kawasaki-shi Kanagawa 211-8588 (JP); HATAIDA, Makoto, Kawasaki-shi Kanagawa 211-8588 (JP); HOSOKAWA, Yuka, Kawasaki-shi Kanagawa 211-8588 (JP)
(74) Representative: HOFFMANN EITLE
(86) International application number: PCT/JP2011/050338
(87) International publication number: WO 2012/095957

(57) **Abstract**

A cache memory device including a cache memory (4) that includes a plurality of entries (40) and includes at least one block including data (42) and a status (43) representing a status of the data (42) for each entry (40) and a control unit (5) that performs replacement of the data (42) on each block of the cache memory (4), wherein the control unit (5) includes a counter (53) that counts the number of replacements by which the data (42) is replaced in each entry (40) for each entry (40) and a switching unit (541) that switches a replacement scheme of the data (42) according to the number of replacements.

## Description

### FIELD

The present disclosure relates to a cache memory device, a control unit of a cache memory, an information processing apparatus, a cache memory control method, and a threshold value decision program for a cache memory device.

### BACKGROUND

In information processing apparatus such as servers or personal computers, there are cases in which a processor acquires data from a main memory through a cache (cache memory device).
A cache is disposed between a processor and a main memory in order to reduce a time taken for a processor such as a central processing unit (CPU) to acquire data from the main memory such as a random access memory (RAM). The cache includes a cache memory and a control unit controlling the cache memory. Generally, the cache memory is a small-sized memory that is higher in speed than the main memory.

When data which the processor requests to the main memory to provide hits a cache, the processor can acquire the data from the cache but does not acquire the data from the main memory, and high-speed processing can be achieved.
Note that, the cache stores data in units of cache lines.
The cache line is a unit used to manage data to be stored in a cache, and for example, data of a predetermined region (size) of a main memory is stored in a single cache line. The data stored in cache line is associated with a tag corresponding to the position of the data, which is stored in the cache line, on the main memory.

The cache searches for a tag part including a tag in a plurality of cache lines based on an address from the processor. Then, when a tag corresponding to information representing a tag included in the request from the processor is found, the cache transfers data associated with the corresponding tag to the processor.
Meanwhile, when the corresponding tag is not found, the cache acquires data from the main memory based on the address from the processor, transfers the acquired data to the processor, and stores (replaces) the corresponding data in any one of a plurality of cache lines in association with the tag.

In replacement by a cache, for example, any one of a plurality of cache lines, that is, a cache line of a replacement target is known to be selected according to the following replacement scheme.
For example, the cache has temporal locality in which an accessed address is likely to be used in the near future, and a least recently used (LRU) scheme is known as an algorithm including the temporal locality. The LRU scheme is a scheme in which a cache line that has not been most recently accessed is used as a replacement target, and thus a probability (a cache hit rate) that data requested by the processor hits a cache is improved.

Besides, as a scheme of increasing the cache hit rate, there is a priority order scheme in which a specific cache contributing to an improvement in cache performance is preferentially cached. In other words, it is a scheme in which a cache including a high priority order is cache-locked so that a specific cache including a high priority order does not become a replacement target.
In the priority order scheme, each data piece stored in the cache memory is associated with status information representing a status of data, and a specific cache (a tag, data, and a status) contributing to an improvement in cache performance is preferentially cached according to the status.

Further, examples of a storage structure of data in a cache include a full associative scheme and a set associative scheme.
In the full associative scheme, data can be stored in any cache line, and an input address given from the processor is compared with all tag parts as described above. In the full associative scheme, since the input address from the processor is compared with all the tag parts, when the number of cache lines increases, the number of logical stages of a comparing circuit increases, and a logical circuit, such as an LRU, selecting a cache line of a replacement target becomes complicated.

In recent years, with the increase in the number of cache lines, due to the above-mentioned reasons, it is difficult to employ the full associative scheme, and the set associative scheme is mostly employed. The set associative scheme is a scheme corresponding to a plurality of blocks of a cache memory, and a plurality of pieces of data including different addresses can be stored in the same entry (cache line). In other words, for example, data of a plurality of predetermined regions (sizes) of a main memory is stored in a cache memory for each block, and a plurality of blocks are managed as a single cache line.

In the set associative scheme, the cache narrows a single cache line down from a plurality of cache lines based on information (index) representing an entry included in a request (input address) from the processor. Then, the cache searches for a tag part in a plurality of blocks in the narrow-down cache line based on information representing a tag included in the request (input address) from the processor. When a tag corresponding to the information representing the tag included in the request from the processor is found, the cache transfers data associated with the tag to the processor.

Meanwhile, when the tag is not found, the cache acquires data from the main memory based on the address from the processor, transfers the acquired data to the processor, and stores (replaces) the data in an arbitrary block of the narrow-down cache line in association with the tag. Note that, the arbitrary block is selected such that the cache memory device selects a replacement target block from a plurality of blocks in the narrow-down cache line according to the above-mentioned replacement scheme.

As described above, in the set associative scheme, the address given from the processor is compared with n blocks (n WAYs) which is present in a single line of a cache. Data stored in a plurality of blocks in a cache line is associated with a tag corresponding to the position of data, which is stored in the corresponding block, on the main memory.
According to the set associative scheme (the nWAY set associative scheme), even when the number of cache lines increases, comparison with the tag parts of the blocks in the single narrow-down cache line is made based on the input address from the processor, and thus an increment in the number of logical stages of the comparing circuit can be suppressed. Further, a logical circuit, such as an LRU, selecting a replacement target block (WAY) can include a simple configuration compared to the full associative scheme.

Note that, in the cache memory device of the full associative scheme, a technique of switching a replacement scheme between the LRU scheme and the priority order scheme when the number of caches including a specific status such as an exclusive mismatch (dirty exclusive) exceeds a certain threshold value is known.

### CITATION LIST

### PATENT LITERATURE

[Patent Literature 1] Japanese Laid-open Patent Publication No. 10-27133

### SUMMARY OF THE INVENTION

### PROBLEMS TO BE SOLVED BY THE INVENTION

Meanwhile, in the priority order scheme, when a specific cache contributing to performance improvement is preferentially stored in a cache, a cache type including a high priority occupies a cache line, and thus performance may get worse.

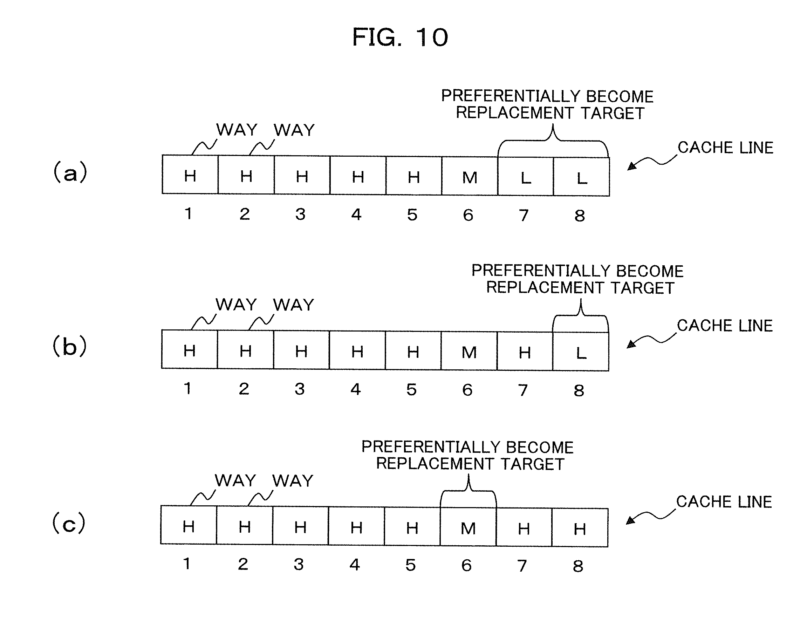

Fig. 10 is a diagram illustrating caches stored in a cache line including 8 WAYs, and Fig. 10(a) is a diagram illustrating a cache including three types of priorities stored in a cache line. Fig. 10(b) is a diagram illustrating a cache including a high priority which is stored in the cache line illustrated in Fig. 10(a), and Fig. 10(c) is a diagram illustrating a cache including a high priority which is stored in the cache line illustrated in Fig. 10(b).

As illustrated in Figs. 10(a) to 10(c), caches including priorities of H (High), M (Middle), and L (Low) are stored in 8 WAYs disposed in the cache line. The cache memory device gives priority to the caches including the priorities in the order of H>M>L.
Note that, the priorities of H, M, and L illustrated in Figs. 10(a) to 10(c) are decided according to the status associated with data of each WAY.

In the cache line illustrated in Fig. 10(a), the cache including the priority of H is stored in each of the WAYs 1 to 5, the cache including the priority of M is stored in the WAY 6, and the cache including the priority of L is stored in each of the WAYs 7 and 8.
Thereafter, when the cache including the priority of H is stored (replaced) in any one of the WAYs in the cache line illustrated in Fig. 10(a), the WAY of the priority of L which is low in the priority to cache is preferentially set as a replacement target as illustrated in Fig. 10(b). In the example illustrated in Fig. 10(b), the cache including the priority of H is replaced in the WAY 7.

Further, when the cache including the priority of H is stored (replaced) in any one of the WAYs in the cache line illustrated in Fig. 10(b), the WAY of the priority of L which is low in the priority to cache is preferentially set as a replacement target as illustrated in Fig. 10(c). In the example illustrated in Fig. 10(c), the cache including the priority of H is replaced in the WAY 8.
Therefore, as described above with reference to Figs. 10(a) to 10(c), in the priority order scheme, when a specific cache contributing to a performance improvement is preferentially stored in a cache, a cache type including a high priority occupies a cache line, and thus performance may get worse.

Further, in the priority order scheme, when a cache line is allocated such that priority is given to a specific cache type, for example, a cache which has a high priority order but is old in terms of time continuously remains in a cache line, and thus there is a problem in that it is difficult to effectively use the entire cache line.
In addition, as described above, the technique of switching the replacement scheme between the LRU scheme and the priority order scheme when the number of caches including a specific status exceeds a certain threshold value is known, but this technique has been employed in the full associative scheme in which the input address from the processor is compared with all cache lines.

Meanwhile, in the set associative scheme, since a plurality of blocks are managed as a single cache line, the types of caches stored in the cache line may be imbalanced, and thus a certain type of a cache may be concentratedly stored in a certain cache line.
For this reason, when the above-mentioned technique is applied to the set associative scheme, the same threshold value is used in all cache lines, and thus in the set associative scheme in which the types of caches are imbalanced by the cache line, it does not necessarily lead to a performance improvement.

Further, in the above-mentioned technique, when the number of caches including a specific status does not continuously exceed the threshold value, only replacement of the priority order scheme is performed, and a cache that has a high priority order but is old in terms of time continuously remains in the cache line. In other words, in the above-mentioned technique, when the number of caches including a specific status does not continuously exceed the threshold value, there is a problem in that the cache hit rate is lowered from a point of view of temporal locality of a cache.

In addition, in the switching of the replacement scheme based on the threshold value in the above-mentioned technique, when the number of caches including a specific status does not exceed the threshold value and a type of a cache including a low priority order is continuously set as a target to be stored in the cache memory, a cache entry (block) including a high priority order is not set as the replacement target. Thus, the number of entries is actually reduced, and for example, when a type of a cache including a low priority order is continuously set as a target to be stored in the cache memory, degradation in performance is expected.

In the light of the foregoing, it is an object of the present disclosure to achieve an improvement in the cache hit rate in a cache memory device.
Note that, the object of the present invention is not limited to the above object, and it is another object of the present invention to obtain an effect which is derived by components according to an embodiment for implementing the invention which will be described later, that is, an effect that is hardly obtained in the related art.

### MEANS TO SOLVE THE PROBLEMS

According to an aspect of the embodiment, a cache memory device which includes a cache memory that includes a plurality of entries and includes at least one block including data and a status representing a status of the data for each entry and a control unit that performs replacement of the cache data on each block of the cache memory, wherein the control unit includes a counter that counts the number of replacements by which the cache data is replaced in each entry for each entry and a switching unit that switches a replacement scheme of the cache data according to the number of replacements.

Further, the present disclosure provides a control unit of a cache memory that performs replacement of data on each block of a cache memory that includes a plurality of entries and includes at least one block including data and a status representing a status of the data for each entry, and includes a counter that counts the number of replacements by which the data is replaced in each entry for each entry and a switching unit that switches a replacement scheme of the data according to the number of replacements.

Further, the present disclosure provides an information processing apparatus that includes the above-described cache memory device.
Further, the present disclosure provides a cache memory control method of performing replacement of data on each block of a cache memory that includes a plurality of entries and includes at least one block including data and a status representing a status of the data for each entry and including counting the number of replacements by which the data is replaced in each entry for each entry and switching a replacement scheme of the data according to the calculated number of replacements.

Further, the present disclosure provides a threshold value decision program for a cache memory device including a cache memory that includes a plurality of entries and includes at least one block including data and a status representing a status of the data for each entry and a control unit that performs replacement of the data on each block of the cache memory, wherein the control unit includes a counter that counts the number of replacements by which the data is replaced in each entry for each entry and a switching unit that switches a replacement scheme of the data according to the number of replacements, and the switching unit switches the replacement scheme when the number of replacements reaches a predetermined threshold value, the threshold value decision program causing a computer to execute a process of changing the predetermined threshold value, calculating a cache hit rate for each changed predetermined threshold value, and deciding the predetermined threshold value based on a plurality of calculated cache hit rates.

### EFFECT OF THE INVENTION

According to a technique of the disclosure, an improvement in the cache hit rate can be achieved in the cache memory device.

### BRIEF DESCRIPTION OF DRAWINGS

Fig. 1 is a diagram illustrating an exemplary hardware configuration of an information processing apparatus as an example of the present embodiment.
Fig. 2 is a diagram illustrating an exemplary configuration of a cache memory device as an example of the present embodiment.
Fig. 3 is a diagram for describing a cache management process performed by a cache memory device as an example of the present embodiment.
Fig. 4 is a diagram for describing a process of selecting a replacement target WAY through a cache memory device as an example of the present embodiment.
Fig. 5 is a diagram illustrating a correspondence relation between a count value and a WAY selection scheme as an example of the present embodiment.
Fig. 6 is a flowchart for describing a process of a replacement target WAY selecting unit as an example of the present embodiment.
Fig. 7 is a flowchart for describing a process of a threshold value deciding unit as an example of the present embodiment.
Fig. 8 is a flowchart for describing a process of a replacement target WAY selecting unit as a modified example of the present embodiment.
Fig. 9 is a flowchart for describing a process of a threshold value deciding unit as a modified example of the present embodiment.
Fig. 10 is a diagram illustrating caches stored in a cache line including 8 WAYs. Fig. 10(a) is a diagram illustrating a cache including three types of priorities stored in a cache line. Fig. 10(b) is a diagram illustrating a cache including a high priority which is stored in the cache line illustrated in Fig. 10(a). Fig. 10(c) is a diagram illustrating a cache including a high priority which is stored in the cache line illustrated in Fig. 10(b).

### REFERENCE SIGNS LIST

1: information processing apparatus
2: CPU
21: input address
3: cache memory device
4: cache memory
40, 40-1 to 40-m: cache line (entry)
41: tag
42: data
43: status
5: cache control unit (control unit, control device)
51: processing unit
511: comparing unit
512: data selecting unit
52: access sequence managing unit
53: counter
54: replacement target WAY selecting unit
541: switching unit
542: block selecting unit
55: threshold value deciding unit
6: memory (main memory)
7: I/O device

### DESCRIPTION OF EMBODIMENTS

Hereinafter, exemplary embodiments of the present invention will be described with reference to the accompanying drawings.

### Embodiment

### [1-1] Configuration of Embodiment

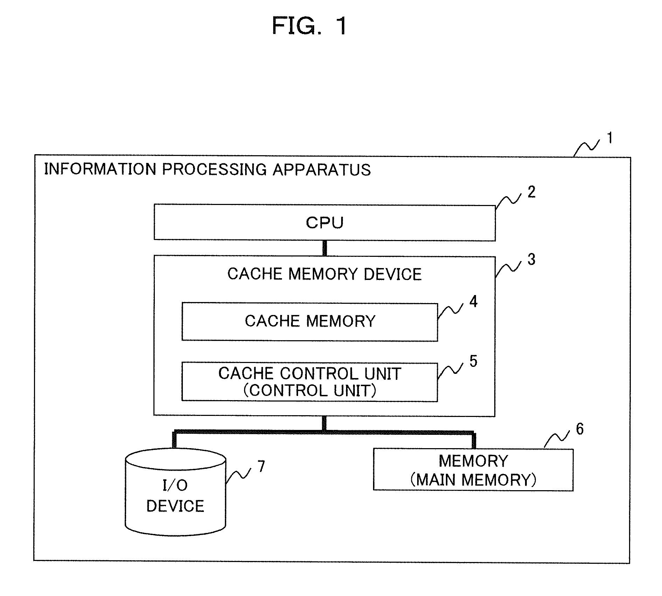

Fig. 1 is a diagram illustrating an exemplary hardware configuration of an information processing apparatus 1 as an example of the present embodiment.

As illustrated in Fig. 1, the information processing apparatus 1 includes a CPU 2, a cache memory device 3, a memory 6 such as a RAM such as a dynamic RAM (DRAM), and an input/output (I/O) device 7 such as a hard disk drive (HDD).
The CPU 2 is an arithmetic processing device that performs various control or calculations in the information processing apparatus 1, and for example, implements various functions by developing a program stored in the I/O device 7 such as a HDD onto the memory 6 and executing the program.

The cache memory device 3 is disposed between the CPU 2 and the memory 6, and holds data to be transferred between the CPU 2 and the memory 6 and reference information of the data. The present embodiment will be described in connection with an example in which the cache memory device 3 employs the nWAY set associative scheme.
The memory (main memory) 6 is a storage region that temporarily stores various pieces of data and programs, and when the CPU 2 executes a program, data or the program is temporarily stored or developed on the memory 6. Note that, the information processing apparatus 1 may further include a memory controller (not illustrated) that performs input/output control between the memory 6 and the cache memory device 3.

For example, the I/O device 7 is an external device such as a HDD. Note that, the information processing apparatus 1 may further include an I/O controller (not illustrated) that performs input/output control between the I/O device 7 and the CPU 2.

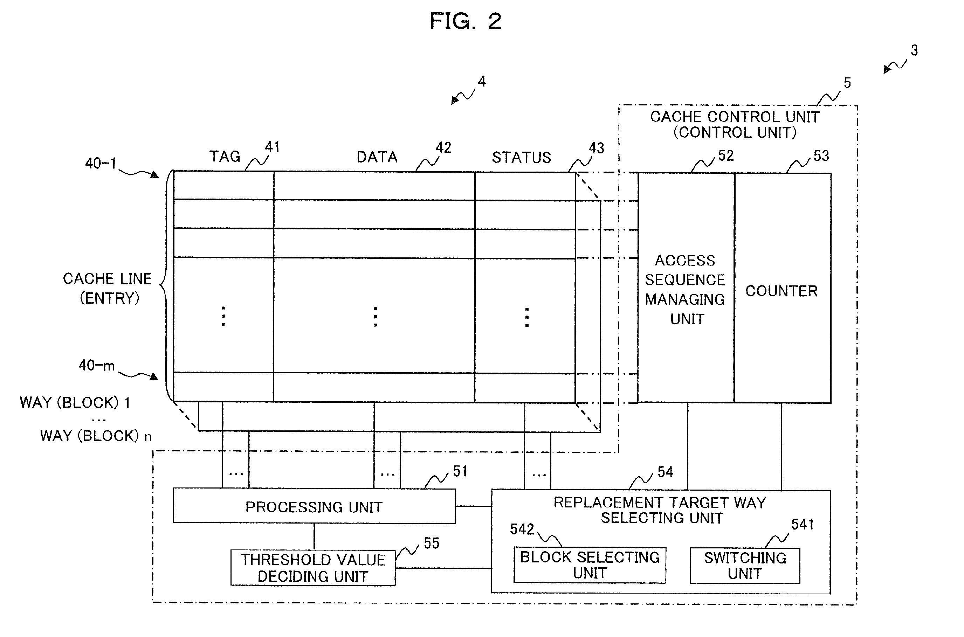

Fig. 2 is a diagram illustrating an exemplary configuration of the cache memory device 3 employing the nWAY set associative scheme according to an example of the present embodiment.

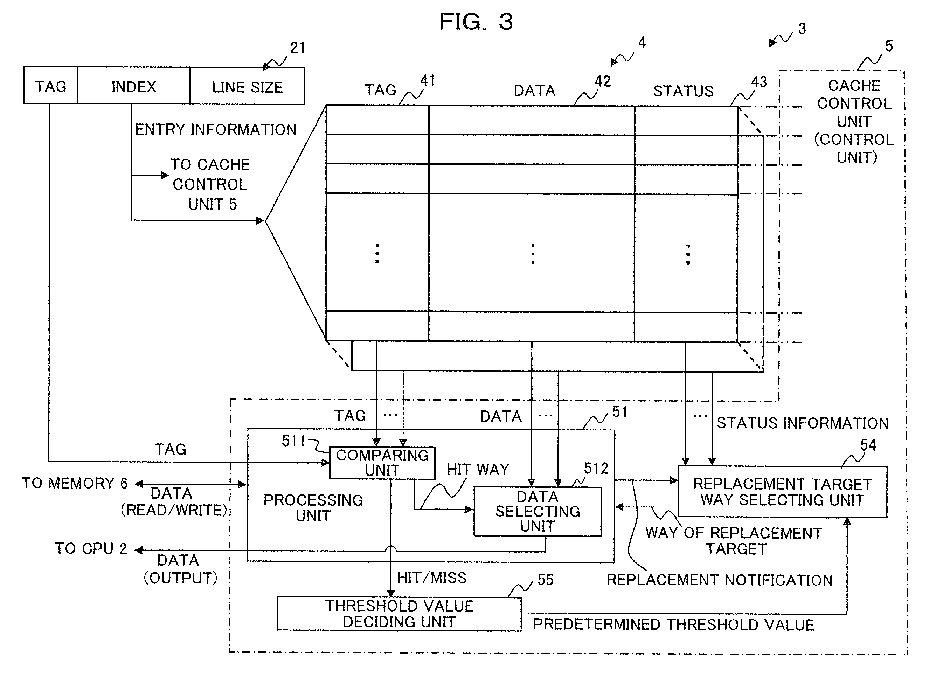

Fig. 3 is a diagram for describing a cache management process performed by the cache memory device 3 according to an example of the present embodiment. Note that, in Fig. 3, for simplification, some of components of a cache control unit 5 are not illustrated.
The cache memory device 3 includes a cache memory 4 and the cache control unit 5.
The cache memory 4 includes a plurality of cache lines (entries) 40-1 to 40-m as illustrated in Fig. 2. Note that, hereinafter, as a reference numerals representing a cache line, reference numerals 40-1 to 40-m are used when it is necessary to specify one of a plurality of cache lines, but a reference numeral 40 is used in order to designate an arbitrary cache line.

The cache memory 4 further includes at least one WAY (block) including a tag 41, data 42 associated with the tag 41, and a status 43 representing a status of a cache, for example, a priority order of the data 42 for each the cache line 40.
In the present embodiment, the cache memory 4 includes WAYs 1 to n each of which includes the tag 41, the data 42, and the status 43 for every cache lines 40-1 to 40-m.

Note that, the cache memory 4 is a memory including a speed higher than the memory 6, and for example, a static RAM (SRAM) is used as the cache memory 4.
The cache control unit (a control unit or a control device) 5 performs cache management on the cache memory 4 in response to a request (input address) transmitted from the CPU 2 to the memory 6, and transfers the acquired data 42 to the CPU 2. The cache control unit 5 performs cache replacement on each of the WAYs of the cache memory 4.

The cache control unit 5 includes a processing unit 51, an access sequence managing unit 52, a counter 53, a replacement target WAY selecting unit 54, and a threshold value deciding unit 55.
The processing unit 51 performs cache management on the cache memory 4 in the cache control unit 5, and transfers data between the CPU 2 and the memory 6.
The processing unit 51 decides the cache line 40 on which replacement is to be performed, outputs a replacement notification representing that replacement is to occur to the replacement target WAY selecting unit 54 which will be described later, and performs cache replacement on a replacement target WAY selected by the replacement target WAY selecting unit 54.

Note that, hereinafter, the cache replacement is assumed to include a process (write back) of writing the data 42 stored in the replacement target WAY in the memory 6 as appropriate and a process of writing the tag 41, the data 42, and the status 43, which are stored in the cache, read from the memory 6 in the replacement target WAY.
Note that, there are cases in which the write-back process is not performed according to the status 43 of the data 42 stored in the replacement target WAY. For example, the write-back process is not performed when the data 42 stored in the replacement target WAY is also stored in a cache of another CPU (Share; a sharing status) or when a corresponding WAY is invalid (Invalid; an invalid status).

The processing unit 51 further includes a comparing unit 511 and a data selecting unit 512.
The comparing unit 511 compares information representing a tag included in a request (an input address 21) from the CPU 2, that, one tag 41 with the tag 41 in a plurality of WAYs 1 to n in one cache line 40.
Further, when the tag 41 corresponding to the tag included in the input address 21 is in the tag 41 of any one of the WAYs 1 to n, the comparing unit 511 (when a hit occurs), a WAY corresponding to the tag 41 is output to the data selecting unit 512.

Further, either when a hit occurs or when a hit does not occur (a miss occurs), the comparing unit 511 outputs hit/miss information to the threshold value deciding unit 55 which will be described later together with information representing the cache line 40 that has been subjected to comparison.
The data selecting unit 512 selects the data 42 from the hit WAY in one cache line 40 based on information of the hit WAY input from the comparing unit 511. Further, the data selecting unit 512 outputs the selected data 42 to the CPU 2.

Specifically, as illustrated in Fig. 3, in the cache memory 4, one cache line 40 is narrowed down (selected) from a plurality of cache lines 40-1 to 40-m based on an index included in the request (the input address 21) from the CPU 2, that is, entry information representing one cache line 40. Note that, serial numbers of the cache lines 40-1 to 40-m, that is, a number (value) representing what number the cache line 40 is from the head among the cache lines 40-1 to 40-m is set to the index included in the input address 21.

The processing unit 51 searches a plurality of WAYs 1 to n in the narrowed-down cache line 40 based on the tag included in the input address 21, that is, information representing one tag 41 through the comparing unit 511.
Then, when the tag 41 corresponding to the tag included in the input address 21 is founded (hit) from the tag 41 in the plurality of WAYs 1 to n of the narrowed-down cache line 40 through the comparing unit 511, the processing unit 51 transfers the data 42 associated with the tag 41 to the CPU 2 through the data selecting unit 512.

Meanwhile, when the tag 41 corresponding to the tag included in the input address 21 is not found (missed), the processing unit 51 acquires data from the memory 6 based on the input address 21 from the CPU 2, and transfers the acquired data to the CPU 2. Further, at this time, the processing unit 51 stores (replaces) the corresponding data in an arbitrary WAY of the narrowed-down cache line 40 together with the corresponding tag 41 and the status 43 representing the priority order of the corresponding data 42.

Further, when the tag 41 corresponding to the tag included in the input address 21 is not found (missed), in order to select an arbitrary WAY of the narrowed-down cache line 40 as the replacement target WAY, the processing unit 51 outputs a replacement notification representing that replacement is to occur to the replacement target WAY selecting unit 54 which will be described later.
Note that, the replacement notification may include information of the cache line 40 of the narrowed-down replacement target.

When the replacement target WAY is input from the replacement target WAY selecting unit 54, the processing unit 51 executes cache replacement on the replacement target WAY.
Note that, when the tag 41 corresponding to the tag included in the input address 21 is found (hit) and access (reference) to a WAY corresponding to the tag 41 is made, the processing unit 51 updates an access sequence (LRU information) managed by the access sequence managing unit 52 which will be described later on the accessed WAY.

Further, even when access (replacement) is performed on the replacement target WAY in the narrowed-down cache line 40 without finding the tag 41 corresponding to the tag included in the input address 21, the processing unit 51 updates an access sequence (LRU information) managed by the access sequence managing unit 52 which will be described later on the accessed WAY.
Note that, in Fig. 3, for simplification, a reference signal line through which the data 42 is output to the CPU 2 and reference write signal lines through which replacement is performed on the replacement target WAY are not illustrated between the processing unit 51 and the cache memory 4.

Further, in Fig. 3, for simplification, a signal line used to update an access sequence (LRU information) is not illustrated between the processing unit 51 and the access sequence managing unit 52.

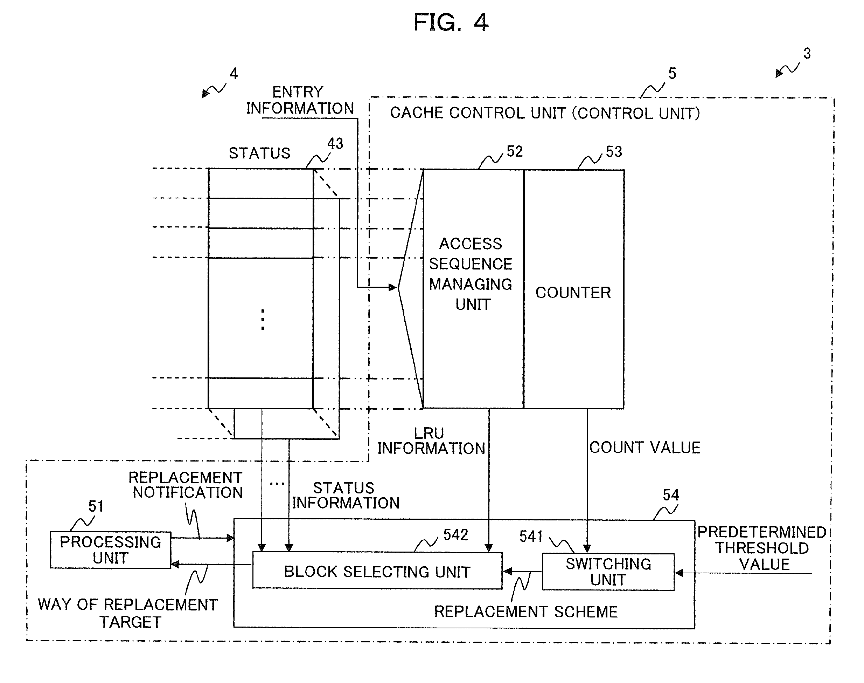

Fig. 4 is a diagram for describing a process of selecting the replacement target WAY through the cache memory device 3 according to an example of the present embodiment.
Note that, in Fig. 4, for simplification, some of the components of the cache memory 4 and some of the components of the cache control unit 5 are not illustrated.

The access sequence managing unit 52 stores and manages an access sequence (LRU information) in which the WAYs 1 to n are accessed for each cache line 40 as information used to select the replacement target WAY of the cache.
Here, the LRU information is information representing a sequence in which the WAYs 1 to n in the cache line 40 are accessed. The LRU information is updated by the processing unit 51 when a cache of any one of the WAYs 1 to n is accessed (referred to or updated), for example, when the WAYs 1 to n are bit by the processing unit 51 and data is referred to (acquired) or when replacement is performed by the processing unit 51.

The access sequence managing unit 52 selects the LRU information corresponding to one cache line 40 based on the index included in the request (the input address 21) from the CPU 2, that is, entry information representing one cache line 40 as illustrated in Fig. 4.
The processing unit 51 updates the LRU information selected by the access sequence managing unit 52 as described above when a cache of any one of the WAYs 1 to n is accessed (referred to or updated) in the cache line 40 designated by the index included in the input address 21.

Note that, the LRU information selected by the access sequence managing unit 52 as described above is referred to when the replacement target WAY is selected by the replacement target WAY selecting unit 54 which will be described later.
As the LRU information, for example, numbers of (1 to n) of WAYs of accessed caches in the cache line 40 may be arranged from the head in order starting from a most recent one. When the numbers are arranged from the head in order starting from the most recent one, the update of the LRU information by the processing unit 51 may be performed such that a number of a newly accessed WAY is shifted to the head of the LRU information.

Note that, the LRU information is not limited to the above-mentioned example, and for example, one in which a time at which a last access is made is stored for every WAYs 1 to n as a time stamp may be used. When the time stamp of every WAYs 1 to n is stored, the replacement target WAY selecting unit 54 (which will be described later) using the LRU information preferably performs a process of selecting a WAY accessed at the oldest (past) time based on the time stamp of the LRU information.

The counter 53 stores and manages a count value for each cache line 40 as information used to select the replacement target WAY of the cache. Further, the count value corresponding to the cache line 40 of the replacement target is counted up by the replacement target WAY selecting unit 54 each time the replacement target WAY selecting unit 54 which will be described later selects the replacement target WAY.

In other words, the counter 53 counts the number of replacements by which the cache is replaced in each cache line 40 for each cache line 40.
Note that, the count value corresponding to the cache line 40 of the replacement target may be counted up by the processing unit 51 at a timing at which the replacement target WAY is actually replaced by the processing unit 51.

Further, the counter 53 selects the count value corresponding to one cache line 40 based on the index included in the request (the input address 21) from the CPU 2, that is, the entry information representing one cache line 40 as illustrated in Fig. 4.
The replacement target WAY selecting unit 54 or the processing unit 51 counts up the count value selected by the counter 53 as described above each time the replacement target WAY is selected or each time the replacement target WAY is replaced.

Note that, in Fig. 4, for simplification, a signal line used to count up the count value is not illustrated between either of the replacement target WAY selecting unit 54 of the processing unit 51 and the counter 53.
Note that, the count value selected by the counter 53 is referred to when the replacement target WAY selecting unit 54 selects the replacement target WAY.

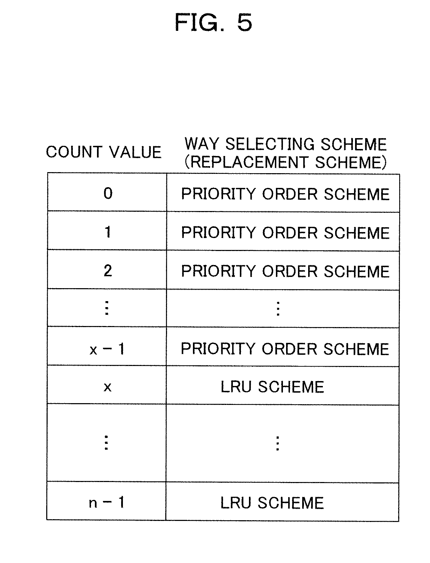

Further, the counter 53 resets the count value to 0 when the count value serving as the number of replacements is equal to a predetermined number, for example, in the present embodiment, when the count value is equal to the number n of WAYs in the cache line 40 as illustrated in Fig. 5.
In other words, in the present embodiment, the counter 53 is a counter that repeats a value between 0 to n-1.

Note that, the predetermined number is not limited to the above example and may be a number smaller or larger than the number n of WAYs in the cache line 40.
When the replacement notification is input from the processing unit 51, the replacement target WAY selecting unit 54 selects the replacement scheme based on the count value stored in the counter 53 and selects the replacement target WAY according to the selected replacement scheme.

The replacement target WAY selecting unit 54 includes a switching unit 541 and a block selecting unit 542.
The switching unit 541 refers to the count value (the number of replacements) of the counter 53 and switches the replacement scheme of selecting the replacement target WAY of the cache according to the referred count value. Specifically, the switching unit 541 switches the replacement scheme using a predetermined threshold value selected by the threshold value deciding unit 55 which will be described later when the count value reaches the predetermined threshold value.

Then, the switching unit 541 outputs information representing the replacement scheme according to the count value (the number of replacements) of the counter 53 to the block selecting unit 542 as illustrated in Fig. 4.
Note that, when the replacement target WAY selecting unit 54 receives the replacement notification from the processing unit 51, the counter 53 selects the count value corresponding to one cache line 40 (of the replacement target in this case) based on the input address 21 from the CPU 2 as described above.

Thus, when the replacement notification serving as a trigger is input from the processing unit 51 to the replacement target WAY selecting unit 54, the switching unit 541 may acquire the count value corresponding to the cache line 40 of the replacement target with reference to the count value selected by the counter 53.
The block selecting unit 542 selects the replacement target WAY based on the information representing the replacement scheme received from the switching unit 541, and outputs information representing the selected replacement target WAY to the processing unit 51.

Fig. 5 is a diagram illustrating a correspondence relation between the count value and the WAY selection scheme (the replacement scheme) according to an example of the present embodiment.
In the present embodiment, the replacement scheme includes, but is not limited to, the priority order scheme and the LRU scheme, and the replacement scheme may include various known schemes according to a use form of the cache memory device 3.

As illustrated in Fig. 5, in the present embodiment, the predetermined threshold value used by the switching unit 541 is "0" and "x".
In other words, the replacement scheme according to the present embodiment is switched from the priority order scheme (a first replacement scheme) to the LRU scheme (a second replacement scheme) by the switching unit 541 when the count value reaches "x" that is the predetermined threshold value.

Meanwhile, when the count value reaches "0" that is predetermined threshold value, that is, when the count value reaches the number n of WAYs in the cache line 40 and is reset to 0 by the counter 53, the switching unit 541 performs switching from the LRU scheme (the second replacement scheme) to the priority order scheme (the first replacement scheme).
Thus, the switching unit 541 outputs information representing the priority order scheme to the block selecting unit 542 as the replacement scheme of the cache when the count value is between 0 and x-1, that is, when the count value is less than x according to the count value (the number of replacements) of the counter 53 as illustrated in Fig. 5.

Further, the switching unit 541 outputs the information representing the LRU scheme to the block selecting unit 542 as the replacement scheme of the cache when the count value is between x and n-1, that is, when the count value is x or more.
Then, the block selecting unit 542 selects the replacement target WAY in the cache line 40 of the replacement target based on the replacement scheme acquired from the switching unit 541, and outputs information representing the selected replacement target WAY to the processing unit 51.

Specifically, when the switching unit 541 selects the priority order scheme as the replacement scheme for the cache line 40 of the replacement target, the block selecting unit 542 selects the replacement target WAY based on the statuses 43 of the WAYs 1 to n disposed in the cache line 40 of the replacement target.
Next, of the selection schemes (the replacement schemes) of the replacement target WAY executed by the replacement target WAY selecting unit 54, the priority order scheme will be described.

Of the replacement schemes, in the priority order scheme, the replacement target WAY selecting unit 54 (the block selecting unit 542) selects the replacement target WAY based on the priorities according to the statuses 43 of the WAYs 1 to n disposed in the cache line 40 of the replacement target.
Note that, when the block selecting unit 542 receives the information representing the priority order scheme from the switching unit 541, the cache memory 4 selects the WAYs 1 to n corresponding to one cache line 40 (of the replacement target in this case) based on the input address 21 from the CPU 2 as described above.

Therefore, when the block selecting unit 542 receives the information representing the priority order scheme from the switching unit 541, the block selecting unit 542 may acquire the status 43 corresponding to the cache line 40 of the replacement target with reference to the statuses 43 of the WAYs 1 to n selected in the cache memory 4.
Next, an example in which the block selecting unit 542 receives the information representing the priority order scheme from the switching unit 541 for the cache line 40 of the replacement target will be described.

Here, the status 43 stored in each of the caches, that is, each of the WAYs 1 to n is represented, for example, by a MESI protocol used in a multi-processor system.
The MESI protocol is a protocol employing four cache statuses of M (Modified), E (Exclusive), S (Shared), and I (Invalid).

Hereinafter, through a specific program or system configuration, actual cache hit rate measurement, or the like, it is assumed to be known that the cache hit rate is improved when caching is preferentially performed on the cache statuses of the MESI protocol in the order of priorities M, E, and S of a cache.
Note that, a cache priority is not set to a WAY including a cache status of I (Invalid) since it means that data of the WAY is invalid.

When the above-described MESI protocol is employed for the status 43, the block selecting unit 542 selects the replacement target WAY such that a cache including the status 43 with a high cache priority is preferentially stored in each of the WAYs 1 to n.
In other words, the block selecting unit 542 preferentially selects a cache including the status 43 with a low cache priority as the replacement target WAY for the cache line 40 of the replacement target. That is, the block selecting unit 542 selects the replacement target WAY based on the status 43 of each of the WAYs 1 to n and the sequence of the priorities S, E, and M of the replacement target that is opposite to the cache priority.

Note that, the block selecting unit 542 may preferentially select a WAY including a cache status of I (Invalid), that is, a WAY that has not be used (invalid) as the replacement target WAY.
In other words, when a WAY including a cache status of I (Invalid) is preferentially selected as the replacement target WAY, the block selecting unit 542 may select the replacement target WAY based on the status 43 of each of the WAYs 1 to n and the sequence of the priorities I, S, E, and M of the replacement target.

Note that, when the replacement target WAY is selected from among caches (WAYs) including the same priority in the cache line 40 of the replacement target, the replacement target WAY selecting unit 54 selects the replacement target WAY from the caches including the same priorities by the LRU scheme which will be described later.
For example, when a plurality of WAYs including the status 43 of S that are preferentially selected as the replacement target are included in the cache line 40 of the replacement target, the replacement target WAY selecting unit 54 selects the replacement target WAY from the WAYs including the status 43 of S by the LRU scheme.

As described above, the replacement target WAY selecting unit 54 selects the replacement target WAY based on the above-described priority according to the status 43, and thus an improvement in the cache hit rate can be achieved.
Note that, as described above, in the present embodiment, the cache status of the MESI protocol is employed as the status 43, but the present invention is not limited to this example, and a cache status of any other protocol may be employed. Further, a value changing according to a data use frequency such as a value representing a cache priority according to a data use frequency may be stored in each of the WAYs 1 to n as the status 43.

Next, of the selection schemes (the replacement schemes) of the replacement target WAY executed by the replacement target WAY selecting unit 54, the LRU scheme will be described.
When the switching unit 541 selects the LRU scheme as the replacement scheme for the cache line 40 of the replacement target, the block selecting unit 542 selects the least recently accessed WAY in the cache line 40 of the replacement target as the replacement target WAY.

In other words, when the information representing the LRU scheme of the replacement schemes is input from the switching unit 541, the block selecting unit 542 selects the least recently accessed WAY the cache line 40 of the replacement target as the replacement target WAY based on the LRU information selected by the access sequence managing unit 52.
Note that, when the block selecting unit 542 receives the information representing the LRU scheme is input from the switching unit 541, the access sequence managing unit 52 selects the LRU information corresponding to one cache line 40 (of the replacement target in this case) based on the input address 21 received from the CPU 2 as described above.

Therefore, when the block selecting unit 542 receives the information representing the LRU scheme from the switching unit 541, the block selecting unit 542 may acquire the LRU information corresponding to the cache line 40 of the replacement target with reference to the LRU information selected by the access sequence managing unit 52.
Note that, as described above, when the LRU information to be stored in the access sequence managing unit 52 is a time stamp of every WAYs 1 to n, the replacement target WAY selecting unit 54 (the block selecting unit 542) preferably searches for the oldest (past) time from the time stamps of the LRU information acquired from the access sequence managing unit 52. Thus, the replacement target WAY selecting unit 54 (the block selecting unit 542) can select a WAY corresponding to a time stamp of the oldest (past) time as the replacement target WAY.

Note that, the replacement target WAY selecting unit 54 may receive information of the cache line 40 of the narrowed-down replacement target together with the replacement notification from the processing unit 51. In this case, the replacement target WAY selecting unit 54 can check whether or not the selected count value, the status information 43, or the LRU information corresponds to the cache line 40 of the input replacement target.

Alternatively, the replacement target WAY selecting unit 54 may acquire the count value, and the status information 43 or the LRU information, based on the input information of the cache line 40 of the replacement target. In other words, the replacement target WAY selecting unit 54 may acquire the information based on the information of the cache line 40 of the replacement target input from the processing unit 51 without using the count value, and the status information 43 or the LRU information, selected based on the input address 21 received from the CPU 2.

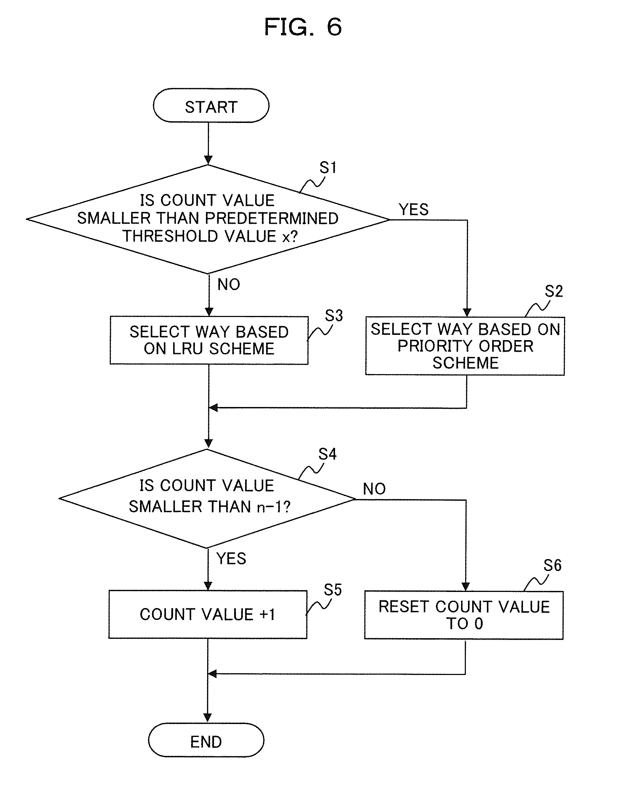

Next, a process performed by the replacement target WAY selecting unit 54 in the cache memory device 3 including the above-described configuration will be described with reference to a flowchart of Fig. 6.
Fig. 6 is a flowchart for describing a process of the replacement target WAY selecting unit 54 according to an example of the present embodiment.
First of all, when the replacement target WAY selecting unit 54 receives the replacement notification from the processing unit 51, the switching unit 541 compares the count value of the counter 53 with the predetermined threshold value "x", and determines whether or not the count value is less than the predetermined threshold value "x" (step S1). Note that, hereinafter, in the flowchart of Fig. 6, the count value corresponds to the cache line 40 of the replacement target selected by the counter 53, and the predetermined threshold value "x" corresponds to the cache line 40 of the replacement target.

As a result of comparison performed by the switching unit 541, when it is determined that the count value is less than the predetermined threshold value "x" (a Yes route in step S1), the switching unit 541 outputs the information representing the priority order scheme to the block selecting unit 542.
When the block selecting unit 542 receives the information representing the priority order scheme, the block selecting unit 542 selects the replacement target WAY by the priority order scheme (step S2), and outputs information representing the selected WAY to the processing unit 51.

Meanwhile, as a result of comparison performed by the switching unit 541 in step S1, when it is determined that the count value is the predetermined threshold value "x" or more (see a No route in step S1), the switching unit 541 outputs the information representing the LRU scheme to the block selecting unit 542.
When the block selecting unit 542 receives the information representing the LRU scheme, the block selecting unit 542 selects the replacement target WAY by the LRU scheme (step S3), and outputs information representing the selected WAY to the processing unit 51.

When the replacement target WAY is selected by the block selecting unit 542 in step S2 or step S3, the replacement target WAY selecting unit 54 determines the count value of the counter 53, and determines whether or not the count value is less than n-1 (step S4).
When it is determined that the count value is the number of WAYs - 1, that is, less than n-1 (a Yes route in step S4), the replacement target WAY selecting unit 54 adds "1" to the count value (step S5), and the process of the replacement target WAY selecting unit 54 ends.

However, when it is determined that the count value is the number of WAYs - 1, that is, equal to n-1 (a No route in step S4), the replacement target WAY selecting unit 54 resets the count value to 0 (step S6), and the process of the replacement target WAY selecting unit 54 ends.
The threshold value deciding unit 55 decides a predetermined threshold value serving as a determination criterion used to switch the replacement scheme, and outputs the decided predetermined threshold value to the switching unit 541.

In the present embodiment, the threshold value deciding unit 55 calculates the cache hit rate on the predetermined threshold value "x" while dynamically changing the value of "x", decides a predetermined threshold value based on the calculated cache hit rate, and outputs the predetermined threshold value to the switching unit 541.
Specifically, the threshold value deciding unit 55 changes the value of "x" at predetermined time intervals, outputs the changed value to the switching unit 541, and calculates cache hit rate for each value of "x" based on the hit/miss information output from the comparing unit 511 of the processing unit 51. Then, the threshold value deciding unit 55 decides the value of "x" at which the cache hit rate is highest as the predetermined threshold value, and outputs the decided value of "x" to the switching unit 541.

As described above, the threshold value deciding unit 55 dynamically changes the value of "x" and thus can dynamically set two optimum rates of the priority order scheme and the LRU scheme.
Note that, as described above, the predetermined threshold value is "0" and "x", the threshold value deciding unit 55 decides the value of the predetermined threshold value "x".
Meanwhile, when the predetermined threshold value is "0", the threshold value deciding unit 55 may not output the predetermined threshold value to the switching unit 541. In other words, in the present embodiment, the switching unit 541 switches the replacement scheme according to whether the count value is less than x or x or more. Thus, when the count value is changed from n-1 that is x or more to 0 that is less than x, the replacement scheme is naturally switched by the switching unit 55 (sic, correctly 541).

Based on the above description, the threshold value deciding unit 55 may decide the value of "x" of the predetermined threshold values "0" and "x" and outputs the decided predetermined threshold value to the switching unit 541.
Note that, the threshold value deciding unit 55 may set the predetermined threshold value for each cache line 40. In other words, the threshold value deciding unit 55 may change the predetermined threshold value to calculate the cache hit rate of each cache line 40 and decide the predetermined threshold value for each cache line 40 based on each of the calculated cache hit rates. In this case, since the predetermined threshold value can be flexibly set for each cache line 40, even when a certain type of a cache is concentratedly stored in the cache line 40, a threshold value causing the cache hit rate to be highest can be set.

Further, the threshold value deciding unit 55 may set a single predetermined threshold value on the entire cache memory 4.
The predetermined threshold value decided by the threshold value deciding unit 55 may be held, for example, in a register (not illustrated) disposed either the switching unit 541 or the threshold value deciding unit 55.
Note that, the function of the threshold value deciding unit 55 may be implemented by hardware or, for example, may be implemented by an external setting node such as a system service processor.

Alternatively, the threshold value deciding unit 55 may not be disposed, and a predetermined fixed threshold value may be set to the switching unit 541 in advance or may be set to the switching unit 541 at an arbitrary timing by the external setting node.
As described above, the replacement target WAY selecting unit 54 uses the priority order scheme by which the replacement target WAY is selected according to the priority order set to the cache status and the LRU scheme in which the least recently accessed WAY is selected regardless of the cache status together. Further, as the rate of the replacement scheme executed by the replacement target WAY selecting unit 54 is set to the optimum rate by the threshold value deciding unit 55, an improvement in the cache hit rate can be achieved.

Next, a process of the threshold value deciding unit 55 in the cache memory device 3 including the above-described configuration will be described.

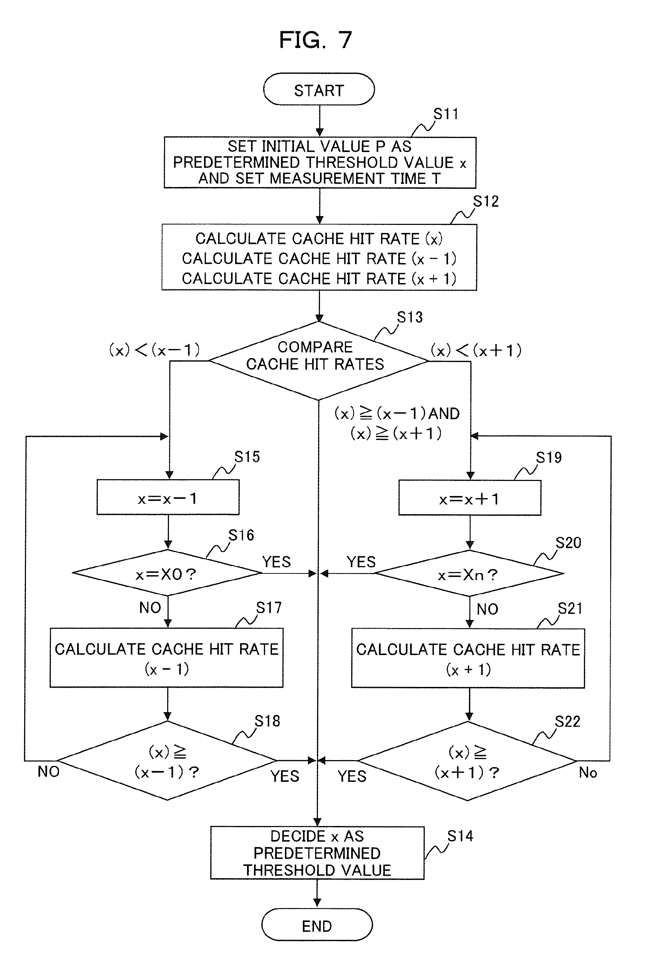

Fig. 7 is a flowchart for describing a process of the threshold value deciding unit 55 according to an example of the present embodiment.
First of all, the threshold value deciding unit 55 set an initial value P to the predetermined threshold value "x", and sets a measurement period of time T (step S11).

Here, the initial value P is an arbitrary value within a range of the count value of the counter 53, and in the present embodiment, an arbitrary value in the range of 0 to n - 1 is used.
Further, the measurement period of time T refers to a period of time during which the hit/miss information from the processing unit 51 is measured after the predetermined threshold value "x" is output (set) to the switching unit 541. As the measurement period of time T, for example, a period of time of about several seconds or a period of time of about several minutes to several hours may be set according to an access frequency to the memory 6 from the CPU 2, the request parameter of the hit/miss information used for a calculation of the cache hit rate, or the like.

Next, the threshold value deciding unit 55 measures the hit/miss information from the processing unit 51 on the predetermined threshold value "x" during the measurement period of time T, and calculates the cache hit rate on the predetermined threshold value "x".
Note that, for example, the cache hit rate is obtained by dividing the number of hits during the measurement period of time T by the number of hits and the number of misses during the measurement period of time T.

Further, the threshold value deciding unit 55 calculates the cache hit rate when the predetermined threshold value is changed to "x - 1" and the cache hit rate when the predetermined threshold value is changed to "x + 1" (step S12).
In other words, in step S12, in addition to the cache hit rate on the predetermined threshold value "x", the threshold value deciding unit 55 measures the hit/miss information from the processing unit 51 on the predetermined threshold value "x - 1" during the measurement period of time T and calculates the cache hit rate on the predetermined threshold value "x - 1". Further, the threshold value deciding unit 55 measures the hit/miss information from the processing unit 51 on the predetermined threshold value "x + 1" during the measurement period of time T and calculates the cache hit rate on the predetermined threshold value "x + 1".

Note that, in step S11, when the value of the predetermined threshold value "x" to which the initial value P is set is a minimum value or a maximum value among the values within the range of the count value of the counter 53, some of the calculations of the cache hit rate in step S12 is not executed. For example, when the value of the predetermined threshold value "x" is the minimum value 0 among the values of 0 to n - 1 within the range of the count value of the counter 53 in the present embodiment, the calculation of the cache hit rate (x - 1) is not executed in step S12. Similarly, when the value of the predetermined threshold value "x" is the maximum value n - 1 among the values of 0 to n - 1 within the range of the count value of the counter 53 in the present embodiment, the calculation of the cache hit rate (x + 1) is not executed in step S12.

Here, in Fig. 7, "cache hit rate calculation (x)" represents that the cache hit rate on the predetermined threshold value "x" is calculated as described above. Even when x - 1 or x + 1 is in parentheses, similarly, it represents that the cache hit rate on the predetermined threshold value "x - 1" or "x + 1" is calculated as described above.
When the cache hit rates on the predetermined threshold values "x", "x - 1", and "x + 1" in step S12 are calculated, the threshold value deciding unit 55 compares the cache hit rates (x), (x - 1), and (x + 1) (step S13).

Note that, when the value of the predetermined threshold value "x" is either the minimum value or the maximum value among the values within the range of the count value of the counter 53 as described above, the threshold value deciding unit 55 performs the comparison using only the cache hit rates obtained in step S12.
Hereinafter, (x), (x - 1), and (x + 1) in which the predetermined threshold values are in parentheses are assumed to represent the cache hit rates on the predetermined threshold values, respectively.

When it is determined that (x) is (x - 1) or more and (x + 1) or more as a result of comparing the cache hit rates (a route of "(x) ≥ (x - 1) and (x) ≥ (x + 1)" in step S13), the threshold value deciding unit 55 decides "x" as the predetermined threshold value (step S14), and the process performed by the threshold value deciding unit 55 ends.
In other words, if when "x" is used as the predetermined threshold value, the cache hit rate is higher than when a value preceding or subsequent to "x" is used as the predetermined threshold value, that is, if the cache hit rate is considered to be highest when "x" is used as the predetermined threshold value, by using "x" as the predetermined threshold value, a switching rate of the priority order scheme and the LRU scheme becomes an optimum rate. Thus, if when "x" is used as the predetermined threshold value, the cache hit rate is higher than when a value preceding or subsequent to "x" is used as the predetermined threshold value, the threshold value deciding unit 55 decides "x" as the predetermined threshold value.

Meanwhile, when it is determined in step S13 that (x) is less than (x - 1) as a result of comparing the cache hit rates (a route of "(x) < (x - 1)" in step S13), the threshold value deciding unit 55 reduces the predetermined threshold value "x" by 1 (decrement) (step S15).
Then, the threshold value deciding unit 55 determines whether or not the predetermined threshold value "x" decreased in step S15 is equal to X0 (step S16).

Note that, X0 is a minimum value among the values within the range of the count value of the counter 53, and in the present embodiment, it is the minimum value 0 among the values within the range of 0 to n - 1 of the count value of the counter 53.
When it is determined in step S16 that the predetermined threshold value "x" is equal to X0 (a Yes route in step S16), the threshold value deciding unit 55 decides "x", that is, the value decreased in step S15 as the predetermined threshold value (step S14), and the process of the threshold value deciding unit 55 ends.

In other words, when it is determined in step S16 that the predetermined threshold value "x" is equal to X0, since the predetermined threshold value "x" is the minimum value among the values within the range of the count value of the counter 53, it is difficult to obtain the cache hit rate on a value less than "x". In other words, when the value of "x" changed in step S15 is the minimum value among the values within the range of the count value of the counter 53 as a result of comparing the magnitude relation of the cache hit rates, "x" is decided as the predetermined threshold value, and thus the cache hit rate (x) is considered to be highest. Thus, when the threshold value deciding unit 55 determines that the predetermined threshold value "x" is equal to X0 in step S16, the current value of "x" is decided as the predetermined threshold value(step S14), and the process of the threshold value deciding unit 55 ends.

Meanwhile, when it is determined in step S16 that the predetermined threshold value "x" is not equal to X0 (a No route in step S16), the threshold value deciding unit 55 calculates the cache hit rate on the predetermined threshold value "x - 1" as described above (step S17).
Note that, the cache hit rate to be calculated in step S17 is calculated on "x - 1" obtained by subtracting "1" from the predetermined threshold value "x" decreased in step S15.

When the cache hit rate on the predetermined threshold value "x - 1" is calculated in step S17, the threshold value deciding unit 55 compares the cache hit rates (x) and (x - 1) with each other, and determines whether or not (x) is (x - 1) or more (step S18).
When it is determined that (x) is less than (x - 1) as a result of comparing the cache hit rates (a No route in step S18), the process returns to step S15.

However, when it is determined in step S18 that (x) is (x - 1) or more as a result of comparing the cache hit rates (a Yes route in step S18), the threshold value deciding unit 55 decides "x", that is, the value decreased in step S15 as the predetermined threshold value (step S14), and the process of the threshold value deciding unit 55 ends.
Further, when it is determined in step S13 that (x) is less than (x + 1) as a result of comparing the cache hit rates (a route of "(x) < (x + 1)" in step S13), the threshold value deciding unit 55 increases the predetermined threshold value "x" by "1" (increment) (step S19).

Then, the threshold value deciding unit 55 determines whether or not the predetermined threshold value "x" increased in step S19 is equal to Xn (step S20).
Note that, Xn is a maximum value among the values within the range of the count value of the counter 53, and in the present embodiment, it is the minimum value n - 1 among the values within the range of 0 to n - 1 of the count value of the counter 53.

When it is determined in step S20 that the predetermined threshold value "x" is equal to Xn (a Yes route in step S20), the threshold value deciding unit 55 decides "x", that is, the value increased in step S19 as the predetermined threshold value (step S14), and the process of the threshold value deciding unit 55 ends.
In other words, when it is determined in step S20 that the predetermined threshold value "x" is equal to Xn, since the predetermined threshold value "x" is the maximum value among the values within the range of the count value of the counter 53, it is difficult to obtain the cache hit rate on a value larger than "x". In other words, when the value of "x" changed in step S19 is the maximum value among the values within the range of the count value of the counter 53 as a result of comparing the magnitude relation of the cache hit rates, "x" is decided as the predetermined threshold value, and thus the cache hit rate (x) is considered to be highest. Thus, when the threshold value deciding unit 55 determines that the predetermined threshold value "x" is equal to Xn in step S20, the current value of "x" is decided as the predetermined threshold value (step S14), and the process of the threshold value deciding unit 55 ends.

Meanwhile, when it is determined in step S20 that the predetermined threshold value "x" is not equal to Xn (a No route in step S20), the cache hit rate on the predetermined threshold value "x + 1" is calculated as described above (step S21).
Note that, the cache hit rate to be calculated in step S21 is calculated on "x + 1" obtained by adding "1" to the predetermined threshold value "x" increased in step S19.

When the cache hit rate on the predetermined threshold value "x + 1" is calculated in step S21, the threshold value deciding unit 55 compares the cache hit rates (x) and (x + 1) with each other, and determines whether or not (x) is (x + 1) or more (step S22).
When it is determined that (x) is less than (x + 1) as a result of comparing the cache hit rates (a No route in step S22), the process returns to step S19.

However, when it is determined in step S22 that (x) is (x + 1) or more as a result of comparing the cache hit rates (a Yes route in step S22), the threshold value deciding unit 55 decides "x", that is, the value increased in step S19 as the predetermined threshold value (step S14), and the process of the threshold value deciding unit 55 ends.
Note that, when it is determined in step S13 that (x) is less than (x - 1) and less than (x + 1) as a result of comparing the cache hit rates, the threshold value deciding unit 55 selects one of (x - 1) and (x + 1) that is larger in the cache hit rate than the other. Then, when the threshold value deciding unit 55 selects (x - 1), the process proceeds to step S15, when (x + 1) is selected, the process proceeds to step S19.

As described above, the threshold value deciding unit 55 changes the predetermined threshold value "x", calculates the cache hit rate for each changed predetermined threshold value, decides a predetermined threshold value based on a plurality of calculated cache hit rates, and outputs the decided predetermined threshold value to the switching unit 541.
Further, as described above, the process of calculating the cache hit rate through the threshold value deciding unit 55 is performed such that the predetermined threshold value "x" is changed at predetermined time intervals, and the changed predetermined threshold value "x" is output to be set to the switching unit 541. Further, the process of calculating the cache hit rate through the threshold value deciding unit 55 is performed such that the cache hit rate is calculated for each predetermined threshold value based on the hit/miss information output from the processing unit 51 in the state in which the switching unit 541 switches the replacement scheme based on the changed predetermined threshold value "x".

Further, as described above, the process of deciding the predetermined threshold value "x" through the threshold value deciding unit 55 is performed such that the highest cache hit rate is selected from among a plurality of cache hit rates, and the predetermined threshold value "x" at which the highest cache hit rate is calculated is decided as the predetermined threshold value "x" to be set to the switching unit 541.
Note that, the process of step S11 to step S22 may be performed independently for each the cache line 40 such that the threshold value deciding unit 55 decides the predetermined threshold value individually for each cache line 40 or may be performed such that one predetermined threshold value is decided in the entire cache memory 4.

Further, when the predetermined threshold value is decided individually for each cache line 40, the process of step S11 to step S22 may be executed in parallel for each cache line 40 or may be executed in order, for example, from the cache line 40-1 to the cache line 40-m line by line.
Note that, when the predetermined threshold value is decided individually for each cache line 40, the threshold value deciding unit 55 can specify the cache line 40 used to collect the hit/miss information based on the information of the cache line 40, in which a hit/miss has occurred, input from the comparing unit 511 together with the hit/miss information.

Further, the process of step S11 to step S22 is executed by the threshold value deciding unit 55 at a predetermined timing or predetermined intervals when the information processing apparatus 1 starts up.
Note that, the predetermined threshold value "x" decided by the threshold value deciding unit 55 may be used as the initial value P when the threshold value deciding unit 55 decides a predetermined threshold value next time.
As described above, the cache control unit 5 of the cache memory device 3 according to an example of the present embodiment includes the counter 53 that counts the number of replacements of the WAY in each cache line 40 and the switching unit 541 that switches the replacement scheme of the WAY according to the number of replacements represented by the count value.

Thus, the switching unit 541 can performs, for example, switching from the priority order scheme to the LRU scheme according to the number of replacements. Thus, unlike the example in which only the priority order scheme described above with reference to Figs. 10(a) to 10(c) is used, the replacement scheme can be switched so that a cache including a high priority does not occupy the cache line 40, and an improvement in the cache hit rate can be achieved. Further, all the cache lines can be effectively used. Further, when the number of caches including a specific status exceeds a certain threshold value, unlike the above-described known technique of switching the replacement scheme between the LRU scheme and the priority order scheme, the counter 53 reliably counts up the number of times that replacement is executed regardless of the number of caches including a specific status. Thus, it is possible to suppress the drop in the cache hit rate occurring when the number of caches including a specific status does not continuously exceed the threshold value.

Further, in the cache control unit 5 of the cache memory device 3 according to an example of the present embodiment, the switching unit 541 switches the replacement scheme when the number of replacements represented by the count value reaches the predetermined threshold value "x". Further, as described above, the counter 53 counts the number of replacements of each the cache line 40.
Thus, when the number of caches including a specific status exceeds a certain threshold value, unlike the above-described known technique of switching the replacement scheme, for example, it is possible to reliably switch another replacement scheme (for example, the LRU scheme) when the number of replacements performed by the priority order scheme reaches the predetermined threshold value "x". In other words, for example, control can be performed such that the replacement by the priority order scheme is performed until the number of replacements reaches the predetermined threshold value "x", and then when the number of replacements reaches the predetermined threshold value "x", switching to the replacement by the LRU scheme is performed.

Thus, when the number of replacements reaches the predetermined threshold value, for example, switching from the priority order scheme to the LRU scheme is reliably performed, and thus a cache that has a high priority order and is old in terms of time does not remain, and thus an improvement in the cache hit rate can be achieved from a point of view of temporal locality of a cache.
Further, even when the number of entries is actually reduced by the priority order scheme, switching to the LRU scheme is performed, and thus when a type of a cache including a low priority order is continuously selected as a target to be selected in a cache memory, a cache that has a high priority order and is old in terms of time becomes a replacement target. Thus, when the number of replacements reaches the predetermined threshold value, that is, after the predetermined threshold value "x" serving as a turning point, the number of entries substantially reduced by the priority order scheme can be substantially increased by the LRU scheme.

In addition, the cache control unit 5 of the cache memory device 3 according to an example of the present embodiment further includes the threshold value deciding unit 55 that decides the predetermined threshold value "x". The threshold value deciding unit 55 changes the predetermined threshold value "x", calculates the cache hit rate, and decides the predetermined threshold value "x" based on the calculated cache hit rate.
Thus, a value optimal to the cache line 40 can be used as the value of the predetermined threshold value "x" to be set to the cache memory 4, and thus an improvement in the cache hit rate can achieved.

Further, in the cache control unit 5 of the cache memory device 3 according to an example of the present embodiment, the threshold value deciding unit 55 changes the predetermined threshold value "x", calculates the cache hit rate of each cache line 40, and decides the predetermined threshold value "x" for each cache line 40 based on each calculated cache hit rate.
Thus, even when types of caches stored in the cache line 40 are imbalanced, and a certain type of a cache is concentratedly stored in the cache line 40, the cache hit rate is calculated, and the predetermined threshold value "x" is set for each cache line 40. In other words, the threshold value deciding unit 55 flexibly the predetermined threshold value "x" for each cache line 40 according to the imbalance in the types of the caches stored in the cache line 40. Thus, an improvement in the cache hit rate can be achieved.

Further, in the cache control unit 5 of the cache memory device 3 according to an example of the present embodiment, when the number of replacements represented by the count value is equal to a predetermined number, for example, the number of WAYs in the cache line 40, the number of replacements is reset to 0.
As a result, a value within the range of the count value of the counter 53, for example, in the present embodiment, an arbitrary value between 0 and n - 1 is used as the predetermined threshold value "x".

Meanwhile, when the number of caches including a specific status exceeds the threshold value, in the above-described known technique of switching the replacement scheme, the threshold value has as many setting values as the number of cache lines in theory, and thus since the capacity of the cache memory of the CPU yearly increases, it is not currently easy to set a threshold value including an optimal hit rate.
Thus, as described above, in the cache control unit 5 of the cache memory device 3 according to an example of the present embodiment, when the number of caches including a specific status exceeds a certain threshold value, an optimal predetermined threshold value can be decided more easily than in the above-described known technique of switching the replacement scheme.

### [2] First modified example

In the above-described present embodiment, the priority order scheme and the LRU scheme are employed and described as the replacement scheme, but the present invention is not limited to this example, and a known replacement scheme such as a round-robin scheme or a random scheme may be employed.
For example, the cache memory device 3 may be configured so that the switching unit 541 performs switching between the priority order scheme and either of the round-robin scheme and the random scheme according to a predetermined threshold value. Further, the cache memory device 3 may be configured so that a plurality of (for example, 3) predetermined threshold values "0", "x1", and "x2" are used, and the switching unit 541 selects a first replacement scheme when the count value is between 0 and x1 - 1, a second replacement scheme when the count value is between x1 and x2 - 1, and a third second replacement scheme when the count value is between x2 and n - 1.

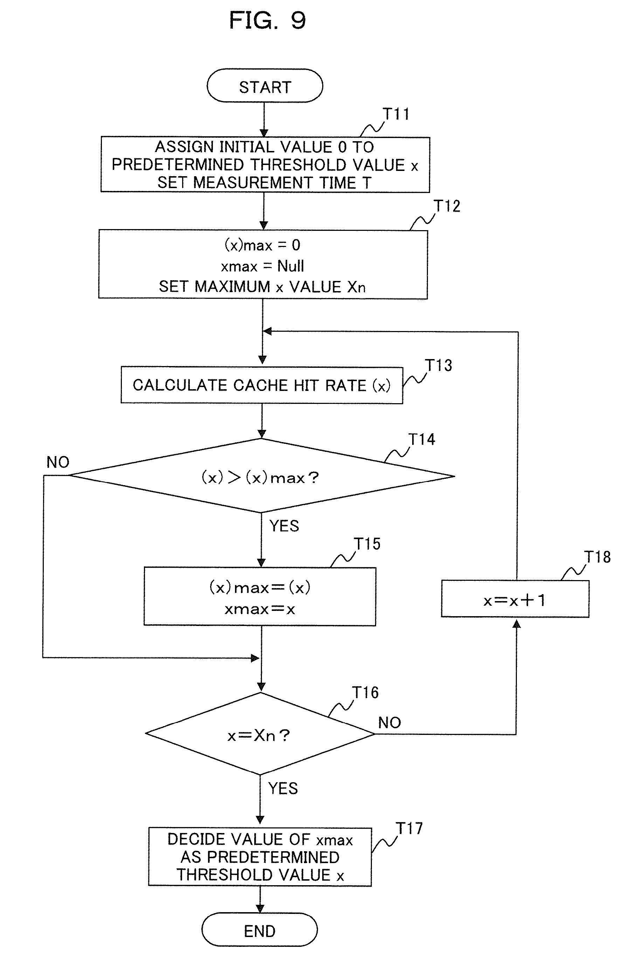

Note that, when the three replacement schemes are switched, the threshold value deciding unit 55 may decide values of predetermined threshold values "x1" and "x2" in order according to the flowchart of Fig. 7 or a flowchart of Fig. 9 which will be described later, or an external setting node such as a system service processor may decides the values of the predetermined threshold values "x1" and "x2".
A first modified example will be described in connection with a process of switching first to third replacement schemes through the replacement target WAY selecting unit 54 when the threshold value deciding unit 55 decides the predetermined threshold values "x1" and "x2".

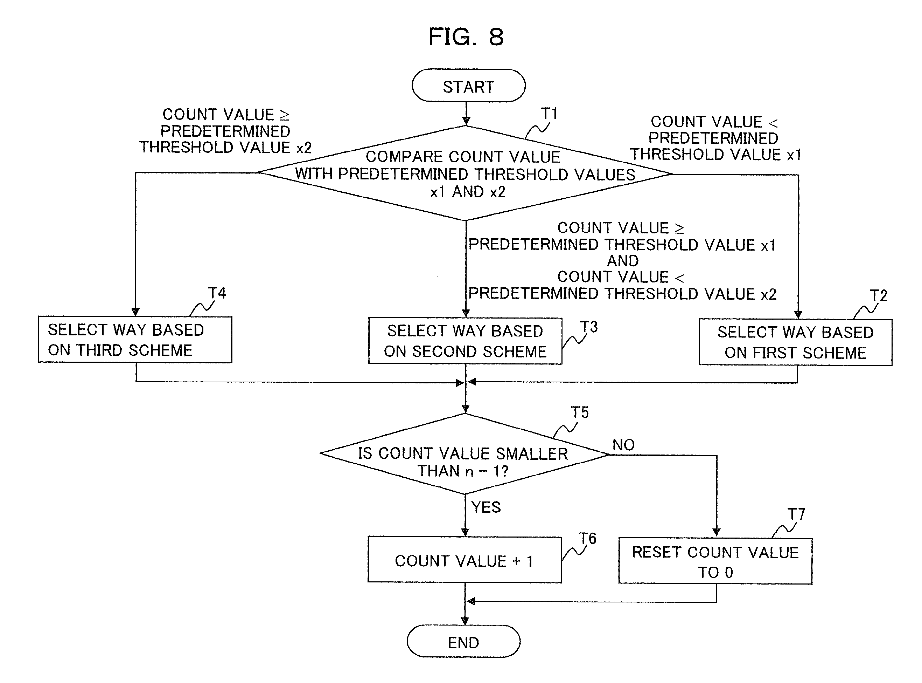

Fig. 8 is a flowchart for describing a process of the replacement target WAY selecting unit 54 according to the modified example of the present embodiment.
First of all, when the replacement target WAY selecting unit 54 receives the replacement notification from the processing unit 51, the switching unit 541 compares the count value of the counter 53 with the predetermined threshold values "x1" and "x2" (step T1).

Note that, hereinafter, in the flowchart illustrated in Fig. 8, the count value corresponds to the cache line 40 of the replacement target to be selected in the counter 53, and the predetermined threshold values "x1" and "x2" correspond to the cache line 40 of the replacement target. Further, the predetermined threshold values are assumed to include a relation of "x1" < "x2".
When it is determined that the count value is less than predetermined threshold value "x1" as a result of comparison performed by the switching unit 541 (a route of "count value < predetermined threshold value x1" in step T1), the switching unit 541 outputs information representing the first replacement scheme to the block selecting unit 542.

When the block selecting unit 542 receives the information representing the first replacement scheme, the block selecting unit 542 selects the replacement target WAY by the first replacement scheme (step T2), and outputs the information representing the selected WAY to the processing unit 51.
Meanwhile, when it is determined that the count value is the predetermined threshold value "x1" or more and less than the predetermined threshold value "x2" as a result of comparison performed by the switching unit 541 in step T1 (a route of "count value ≥ predetermined threshold value x1 and count value < predetermined threshold value x2" in step T1), the switching unit 541 outputs information representing the second replacement scheme to the block selecting unit 542.

When the block selecting unit 542 receives the information representing the second replacement scheme, the block selecting unit 542 selects the replacement target WAY by the second replacement scheme (step T3), and outputs information representing the selected WAY to the processing unit 51.
Further, when the count value is the predetermined threshold value "x2" or more as a result of comparison performed by the switching unit 541 (a route of "count value ≥ predetermined threshold value x2" in step T1), the switching unit 541 outputs information representing the third replacement scheme to the block selecting unit 542.

When the block selecting unit 542 receives the information representing the third replacement scheme, the block selecting unit 542 selects the replacement target WAY by the third replacement scheme (step T4), and outputs information representing the selected WAY to the processing unit 51.
When the replacement target WAY is selected by the block selecting unit 542 in any one of step T2 to step T4, the replacement target WAY selecting unit 54 determines the count value of the counter 53, and then determines whether or not the count value is less than n - 1 (step T5).

When the count value is the number of WAYs - 1, that is, less than n - 1 (a Yes route in step T5), the replacement target WAY selecting unit 54 increases the count value by "1" (step T6), and then the process of the replacement target WAY selecting unit 54 ends.
However, when the count value is the number of WAYs - 1, that is, equal to n - 1 (a No route in step T5), the replacement target WAY selecting unit 54 resets the count value to 0 (step T7), and then the process of the replacement target WAY selecting unit 54 ends.

As described above, in the cache control unit 5 of the cache memory device 3 according to the first modified example, the same effects as in the present embodiment are obtained, and the replacement target WAY selecting unit 54 can switch another replacement scheme through the replacement target WAY selecting unit 54 without being limited to the priority order scheme and the LRU scheme. Further, since the three replacement schemes can be switched by the replacement target WAY selecting unit 54, by setting the predetermined threshold values "x1" and "x2" according to the use status, the optimal replacement scheme can be selected, and thus an improvement in the cache hit rate can achieved.

### [3] the second modified example

In the present embodiment and the first modified example, the threshold value deciding unit 55 decides the predetermined threshold value "x" according to the flowchart illustrated in Fig. 7, but the present invention is not limited to the example, and the threshold value deciding unit 55 may decide the predetermined threshold value "x", for example, the flowchart illustrated in Fig. 9.
Next, a second modified example will be described in connection with a process of deciding the predetermined threshold value "x" through the threshold value deciding unit 55.

Fig. 9 is a flowchart for describing a process of the threshold value deciding unit 55 according to a modified example of the present embodiment.
First of all, the threshold value deciding unit 55 decides an initial value 0 to the predetermined threshold value "x", and sets the measurement period of time T (step T11).
Here, the initial value 0 is a minimum value among the values within the range of the count value of the counter 53, and in the present embodiment, it is a minimum value 0 among the values within the range of 0 to n - 1 of the count value of the counter 53.

The measurement period of time T is the same as described above with reference to Fig. 7.
Next, the threshold value deciding unit 55 sets 0 to (x)max, sets Null to xmax, and sets a maximum x value Xn (step T12).
Note that, (x)max represents a highest cache hit rate. Further, xmax represents a value of the predetermined threshold value "x" when the highest cache hit rate is obtained. Further, Xn is a maximum value among the values within the range of the count value of the counter 53, and in the present embodiment, it is a maximum value n - 1 among the values within the range of 0 to n - 1 of the count value of the counter 53.

Then, the threshold value deciding unit 55 measures the hit/miss information from the processing unit 51 on the predetermined threshold value "x" during the measurement period of time T, and calculates the cache hit rate on the predetermined threshold value "x" (step T13).
Note that, for example, the cache hit rate is obtained by dividing the number of hits during the measurement period of time T by the number of hits and the number of misses during the measurement period of time T as described above with reference to Fig. 7.

Here, in Fig. 9, "cache hit rate calculation (x)" represents that the cache hit rate on the predetermined threshold value "x" is calculated as described above.
When the cache hit rate on the predetermined threshold value "x" in step T13, the threshold value deciding unit 55 compares the cache hit rate (x) with the highest cache hit rate (x)max, and determines whether or not (x) is larger than (x)max (step T14).

Hereinafter, (x) in which the predetermined threshold value is in parentheses is assumed to represent the cache hit rates on the predetermined threshold value "x".
When it is determined (x) is larger than (x)max as a result of comparing the cache hit rates (a Yes route in step T14), the threshold value deciding unit 55 sets (x) to the highest cache hit rate (x)max and sets x to xmax (step T15).

In other words, when (x) is larger than (x)max, the threshold value deciding unit 55 determines that (x) is the highest cache hit rate, (x)max is updated to a value of (x), and xmax is updated to the predetermined threshold value "x" at which the highest cache hit rate (x) is obtained.
Then, the threshold value deciding unit 55 determines whether or not x is equal to Xn (step T16), and when x is equal to Xn (a Yes route in step T16), the threshold value deciding unit 55 sets a value of xmax to the predetermined threshold value "x" (step T17), and the process of the threshold value deciding unit 55 ends.

In other words, when x is equal to Xn, the threshold value deciding unit 55 sets the value of the predetermined threshold value "x" to all values within the range of the count value of the counter 53, determines that the cache hit rates have been compared, and sets a value finally set to xmax to the predetermined threshold value "x".
Meanwhile, when it is determined that x is not equal to Xn by the determination of step T16 on whether x is equal to Xn (a No route in step T16), the threshold value deciding unit 55 increases x by 1 (increment) (step T18), and the process proceeds to step T13.

Further, when it is determined that (x) is not larger than (x)max as a result of comparing the cache hit rates in step T14 (a No route in step T14), the threshold value deciding unit 55 skips step T15, and the process proceeds to step T16.
As described above, the threshold value deciding unit 55 according to the second modified example executes the process of calculating the cache hit rate and the process of deciding the cache hit rate, and decides the predetermined threshold value "x", similarly to the example described above with reference to Fig. 7.

In other words, the process of calculating the cache hit rate through the threshold value deciding unit 55 according to the second modified example is performed such that the predetermined threshold value "x" is changed at predetermined time intervals, and the changed predetermined threshold value "x" is output to be set to the switching unit 541, similarly to the example described above with reference to Fig. 7. Further, the cache hit rate is calculated for each predetermined threshold value based on the hit/miss information output from the processing unit 51 in the state in which the switching unit 541 switches the replacement scheme based on the changed predetermined threshold value "x".

Further, the process of deciding the predetermined threshold value "x" through the threshold value deciding unit 55 according to the second modified example is performed such that the highest cache hit rate is selected from among a plurality of cache hit rates, and the predetermined threshold value "x" at which the highest cache hit rate is calculated is decided as the predetermined threshold value "x" to be set to the switching unit 541, similarly to the example described above with reference to Fig. 7.
Note that, the process of step T11 to step T18 may be performed independently for each the cache line 40 such that that the threshold value deciding unit 55 decides the predetermined threshold value individually for each cache line 40 or may be performed such that one predetermined threshold value is decided in the entire cache memory 4, similarly to the process of step S11 to step S22 illustrated in Fig. 7.

Further, when the predetermined threshold value is decided individually for each cache line 40, the process of step T11 to step T18 may be executed in parallel for each cache line 40 or may be executed in order, for example, from the cache line 40-1 to the cache line 40-m line by line.
Note that, when the predetermined threshold value is decided individually for each cache line 40, the threshold value deciding unit 55 can specify the cache line 40 used to collecting the hit/miss information based on the information of the cache line 40, in which a hit/miss has occurred, input from the comparing unit 511 together with the hit/miss information.

Further, the process of step T11 to step T18 is executed by the threshold value deciding unit 55 at a predetermined timing or predetermined intervals when the information processing apparatus 1 starts up.
As described above, the threshold value deciding unit 55 according to the second modified example increases the predetermined threshold value "x" from the minimum value to the maximum value within the range of the count value of the counter 53, and calculates the cache hit rate each time. Further, since the highest cache hit rate and the value of "x" at that time are stored as (x)max and xmax, the threshold value deciding unit 55 can reliably decide the predetermined threshold value "x" within the range of the count value of the counter 53.

Note that, the initial value set to the predetermined threshold value "x" in step T11 may be the maximum value among the values within the range of the count value of the counter 53, that is, n - 1 in the present embodiment. Note that, in this case, Xn set in step T12 is set to the minimum value among the values within the range of the count value of the counter 53, that is, 0 in the present embodiment. Further, in step T18, the threshold value deciding unit 55 decreases x by 1 (decrement).

As described above, in the cache control unit 5 of the cache memory device 3 according to the second modified example, the same effects as in the present embodiment and the first embodiment (sic, first modified example) are obtained, and a value at which the cache hit rate is highest can be reliably decided based on the values within the range of the count value of the counter 53 as the predetermined threshold value "x".
For example, even when the cache hit rates on a certain predetermined threshold value "x" and preceding and subsequent threshold values indicates the local maximum value on the certain predetermined threshold value "x", there may be another predetermined threshold value at which the cache hit rate is highest within a range settable as the predetermined threshold value. In this case, the threshold value deciding unit 55 according to the second modified example may not decide the local maximum value as the predetermined threshold value "x" and may verify all values within the range settable as the predetermined threshold value and decide the maximum value as the predetermined threshold value. Thus, the threshold value deciding unit 55 can decide an optimal predetermined threshold value, and an improvement in the cache hit rate can achieved.

### [4] Others

The exemplary embodiment and the modified examples of the present invention have been described above, but the present invention is not limited to a specific embodiment and modified example, and various changes or modification can be made within the range not departing from the gist of the present invention.
For example, the switching unit 541 illustrated in Figs. 2 to 4 may be separated from the replacement target WAY selecting unit 54 and disposed between the counter 53 and the replacement target WAY selecting unit 54.

Further, the cache memory device 3 according to the present embodiment and the present modified example has been described to employ the set associative scheme, but the present invention is not limited to this example, and for example, the cache memory device 3 may employ the full associative scheme.
For example, when the cache memory device 3 employs the full associative scheme, the process of selecting the replacement target WAY through the replacement target WAY selecting unit 54 is preferably applied to a process of selecting a replacement target entry from a plurality of entries (cache lines). In other words, the full associative scheme can be applied to the cache memory device 3 such that a plurality of WAYs in a single cache line described above in the present embodiment and the present modified example are replaced with a plurality of entries in a cache memory of the full associative scheme.

Note that, a program (a threshold value decision program) for implementing the function of the threshold value deciding unit 55 is provided in a form stored in a computer readable recording medium such as a flexible disk, CD (CD-ROM, CD-R, CD-RW, or the like), DVD (DVD-ROM, DVD-RAM, DVD-R, DVD+R, DVD-RW, DVD+RW, HD DVD, or the like), a Blu-ray disk, a magnetic disk, an optical disk, or a magnetic optical disk. Then, a computer reads the program from the recording medium, transfers the program to be stored in an internal storage device or an external storage device, and uses the program. Further, the program may be recorded in a storage device (a recording medium) such as a magnetic disk, an optical disk, or a magnetic optical disc and then provided to the computer from the storage device through a communication line.

When the function of the threshold value deciding unit 55 is implemented, the program stored in the internal storage device (in the present embodiment, the memory 6 or the I/O device 7 such as a HDD) is executed by a microprocessor of the computer (in the present embodiment, the CPU 2). At this time, the program recorded in the recording medium may be read and executed by the computer. Further, when the function of the threshold value deciding unit 55 is implemented, the program stored in the storage device of the external setting node may be executed by a microprocessor of the computer (in the present embodiment, the system service processor).

Note that, in the present embodiment, the computer includes hardware and an operating system (OS), and means hardware operating under control of the operating system. Further, when the operating system is unnecessary and the hardware is operated by an application program alone, the hardware corresponds to the computer. The hardware includes a microprocessor such as a CPU and a device reading a computer program recorded in a recording medium, and in the present embodiment, the information processing apparatus 1 has the function of the computer.

## Claims

1. A cache memory device, comprising:
a cache memory that includes a plurality of entries and includes at least one block including data and a status representing a status of the data for each entry; and
a control unit that performs replacement of the data on each block of the cache memory,
wherein the control unit includes
a counter that counts the number of replacements by which the data is replaced in each entry for each entry, and
a switching unit that switches a replacing scheme of the data according to the number of replacements.

2. The cache memory device according to claim 1,
wherein the switching unit switches the replacing scheme when the number of replacements reaches a predetermined threshold value.

3. The cache memory device according to claim 2,
wherein the control unit further includes a threshold value deciding unit that decides the predetermined threshold value, and
the switching unit switches the replacing scheme using the predetermined threshold value decided by the threshold value deciding unit.

4. The cache memory device according to claim 3,
wherein the threshold value deciding unit changes the predetermined threshold value, calculates a cache hit rate, and decides the predetermined threshold value based on the calculated cache hit rate.

5. The cache memory device according to claim 4,
wherein the threshold value deciding unit changes the predetermined threshold value, calculates a cache hit rate of each entry, and decides the predetermined threshold value based on each calculated cache hit rate for each entry.

6. The cache memory device according to any one of claims 1 to 5,
wherein the counter resets the number of replacements when the number of replacements is equal to a predetermined number.

7. The cache memory device according to claim 6,
wherein the counter resets the number of replacements when the number of replacements is equal to the number of blocks in the entry.

8. The cache memory device according to any one of claims 1 to 7,
wherein the replacing scheme includes a priority order scheme by which a replacement target block on which replacement is to be performed is selected based on a priority according to the status and a least recently used (LRU) scheme by which a least recently accessed block in the entry is selected as the replacement target block.

9. The cache memory device according to claim 8,
wherein the control unit further includes an access sequence managing unit that manages an access sequence in which the block is accessed for each entry, and
the control unit performs replacement by the LRU scheme based on the access sequence managed by the access sequence managing unit.

10. The cache memory device according to any one of claims 1 to 9,
wherein the control unit further includes
a block selecting unit that acquires a replacing scheme corresponding to a replacement target entry on which replacement is to be performed from the switching unit, and selects a replacement target block in the replacement target entry based on the acquired replacing scheme, and
a processing unit that decides the replacement target entry, outputs information representing the replacement target entry to the block selecting unit, and performs replacement of the data on the replacement target block selected by the block selecting unit.

11. The cache memory device according to any one of claims 1 to 10,
wherein a set associative scheme is employed.

12. A control unit of a cache memory that performs replacement of data on each block of a cache memory that includes a plurality of entries and includes at least one block including data and a status representing a status of the data for each entry, the control unit comprising:
a counter that counts the number of replacements by which the data is replaced in each entry for each entry; and
a switching unit that switches a replacing scheme of the data according to the number of replacements.

13. The control unit of the cache memory according to claim 12,
wherein the switching unit switches the replacing scheme when the number of replacements reaches a predetermined threshold value.

14. The control unit of the cache memory according to claim 13, further comprising,
a threshold value deciding unit that decides the predetermined threshold value,
wherein the switching unit switches the replacing scheme using the predetermined threshold value decided by the threshold value deciding unit.

15. An information processing apparatus, comprising:
the cache memory device according to any one of claims 1 to 11.

16. A cache memory control method of performing replacement of data on each block of a cache memory that includes a plurality of entries and includes at least one block including data and a status representing a status of the data for each entry, the cache memory control method comprising:
counting the number of replacements by which the data is replaced in each entry for each entry; and
switching a replacing scheme of the data according to the calculated number of replacements.

17. A threshold value determination program for a cache memory device including a cache memory that includes a plurality of entries and includes at least one block including data and a status representing a status of the data for each entry and a control unit that performs replacement of the data on each block of the cache memory, wherein the control unit includes a counter that counts the number of replacements by which the data is replaced in each entry for each entry and a switching unit that switches a replacing scheme of the data according to the number of replacements, and the switching unit switches the replacing scheme when the number of replacements reaches a predetermined threshold value, the threshold value determination program causing a computer to execute a process of:
changing the predetermined threshold value and calculating a cache hit rate for each changed predetermined threshold value;
deciding the predetermined threshold value based on a plurality of calculated cache hit rates.
